# EUROPÄISCHE PATENTSCHRIFT

(11) **EP 1 403 676 B1**
(45) Veröffentlichungstag und Bekanntmachung des Hinweises auf die Patenterteilung: **03.05.2006**
(21) Anmeldenummer: 03021531.3
(22) Anmeldetag: 24.09.2003
(51) Int. Cl.: G02B 21/16, G03F 7/20

(54) **Strukturbreiten-Messgerät**
Apparatus for measuring structure widths
Appareil de mesure de largeurs de structure

(30) Priorität: 28.09.2002 DE 10245473
(43) Veröffentlichungstag der Anmeldung: 31.03.2004
(73) Patentinhaber: Leica Microsystems Semiconductor GmbH, 35578 Wetzlar (DE)
(72) Erfinder: Cemic, Franz, Dr., 35789 Weilmünster (DE); Danner, Lambert, 35584 Wetzlar-Naunheim (DE)
(74) Vertreter: Reichert, Werner Franz

(56) Entgegenhaltungen:
- DE-A- 10 062 579
- US-A1- 2002 001 090
- PATENT ABSTRACTS OF JAPAN vol. 017, no. 372 (P-1573), 13. Juli 1993 (1993-07-13) & JP 05 060982 A (NIKON CORP), 12. März 1993 (1993-03-12)
- PATENT ABSTRACTS OF JAPAN vol. 2002, no. 05, 3. Mai 2002 (2002-05-03) & JP 2002 023061 A (NIKON CORP), 23. Januar 2002 (2002-01-23)

## Beschreibung

Die Erfindung betrifft ein Strukturbreiten-Messgerät mit einer Lichtquelle, einer Strahlformungsoptik, und einem Kondensor.

Strukturbreiten-Messgeräte werden in der Produktion von Halbleitem zum Messen von Strukturbreiten (englisch: critical dimension = cd) eingesetzt, um die Maßhaltigkeit von Strukturen auf Halbleiter-Chips nach den einzelnen Produktionsschritten zu überprüfen und die Qualität der Produktionsschritte zu steuern. Bei ständig steigenden Packungsdichten auf den Halbleiter-Chips werden zugleich die Strukturbreiten der zu vermessenden Strukturen immer kleiner. Entsprechend steigen die Anforderungen an die Spezifikationen von Mess- und Inspektionssystemen, z.B. die Anforderungen an die Messgenauigkeit und die Wiederholbarkeit der Messergebnisse.

Optische Antastverfahren und entsprechende optische Mess-Vorrichtungen werden in der Produktion bevorzugt, obwohl die Strukturbreiten der zu vermessenden Strukturen schon kleiner als die zum Messen bzw. zur Inspektion verwendete optische Wellenlänge sind. Dies liegt daran, dass die optischen Mess-Vorrichtungen wesentlich leichter zu benutzen sind als die nicht-optischen. Gleichzeitig steigen aber die Anforderungen an die optischen Mess-Vorrichtungen, insbesondere bezüglich des Auflösungsvermögens und der Trennung von benachbarten Strukturen. Eine entscheidende Rolle spielt hierbei die Güte der Beleuchtung der zu untersuchenden Strukturen. Um Strukturbreiten, Kantenprofile und ähnliche kritische Größen mit optischen Mitteln reproduzierbar vermessen zu können, müssen aus Fourier-optischen Gründen die Messfelder, also die bei der Messung erfassten Strukturen und deren Umgebung, extrem homogen ausgeleuchtet werden.

Dazu werden in den bekannten Strukturbreiten-Messgeräten unterschiedliche Arten von Beleuchtungseinrichtungen eingesetzt. So werden in einer Art der Beleuchtungseinrichtungen als Lichtquellen Gas-Entladungslampen eingesetzt und die zu untersuchenden Objekte nach Art der klassischen Köhler-Beleuchtung ausgeleuchtet. Die bekannten Gas-Entladungslampen weisen für die Strukturbreiten-Messung ungünstige, d.h. asymmetrische, Nah-und Fernverteilungen der Lichtintensität auf. Diese Feldverteilungen führen bei einer Köhler-Beleuchtung zu einer ungleichmäßigen Ausleuchtung des optischen Messfelds und der Pupille. Als Pupille wird dabei in einer Auflicht-Beleuchtung die Objektiv-Pupille und in einer Durchlicht-Beleuchtung die Kondensor-Pupille bezeichnet. Die ungleichmäßige Ausleuchtung und insbesondere eine schräge Beleuchtung hat zur Folge, dass die gemessenen Strukturbreiten von der Position und der Orientierung der zu untersuchenden Struktur im optischen Messfeld abhängig sind. Dies hat den Nachteil, dass die hohen Anforderungen der Anwender an die Reproduzierbarkeit und Unabhängigkeit der Messergebnisse von der Messposition und der Orientierung der Struktur nicht erfüllt werden können.

Die DE 100 62 579 A1 beschreibt eine Photollthographie-Belichtungseinrichtung mit einer Beleuchtungseinrichtung, die einen optischen Integrierer nach dem Prinzip der Wellenfrontunterteilung aufweist. Das von einer Laser ausgehende Ucht durchläuft einen Strahlaufweiter, eine erstes Mikrolinsen-Array, eine Positivlinse sowie den optischen Integrierer, der aus zwei Mikrolinsen-Arrays aufgebaut ist. Eine zweite Positivlinse dient als Kondensor. Mittels geeigneter Blenden wird ein für den Lithographie-Prozess geeignetes kleines Beieuehtungsfeid erzielt.

Die US 2002/0001090 A1 beschreibt eine Koordinatenmessmaschine, welche die Position von Strukturen auf einem Objekt bestimmt und somit auch eine Strukturbreltenmessung erlaubt Das Licht einer Lichtquelle wird in ein Faserbündel eingekoppelt an dessen anderen Ende wieder ausgekoppelt und auf eine einstufige Homogenfalerungsoptik geleitet, die aus einem Mikrowabenkondensor und einem als Kondensor wirkenden Linsenglied besteht Auf diese Weise wird eine einstufige Homogenisierung der Beleuchtung erzielt.

In anderen Strukturbreiten-Messgeräten werden Laser als Lichtquellen eingesetzt. Dies hat den Nachteil, dass die von dem Laser emittierte Strahlung nahezu vollständig kohärent ist. Dieser hohe Kohärenzgrad führt zu Eigeninterferenzen des Strahlungsfeldes. Diese machen sich beispielsweise durch Laserlicht-Granulation im Messfeld bemerkbar und beeinflussen die Strukturbreiten-Messung ebenfalls negativ, so dass eine hohe Reproduzierbarkeit und Unabhängigkeit der Messergebnisse von der Messposition und der Orientierung der Struktur nicht möglich ist.

Es ist daher Aufgabe der vorliegenden Erfindung, ein Strukturbreiten-Messgerät anzugeben, mit dem reproduzierbare, von der Messposition und der Orientierung der Struktur unabhängige Strukturbreiten-Messungen möglich sind.

Diese Aufgabe wird gelöst durch ein Strukturbreiten-Messgerät gemäss Anspruch 1.

Als Lichtquelle kann ein Laser und als Strahlformungsoptik eine Strahlaufweitungsoptik angeordnet sein. Alternativ kann die Lichtquelle als eine Gasentladungslampe und die Strahlformungsoptik als ein Kollektor ausgebildet sein. In diesem Fall ist es vorteilhaft, wenn zusätzlich ein spektral wirksames Filtersystem vorgesehen ist, welches nur den für die jeweilige Messung erforderlichen Spektralanteil des Lichtquellenspektrums durchlässt. In diesem Fall ist dann das spektral wirksame Filtersystem am Ausgang des Kollektors angeordnet.

Die Mikrolinsenarray-Anordnung kann beispielsweise eine Vielzahl von gleichen, sechseckigen, wabenförmigen oder quadratischen Mikrolinsen aufweisen. Alternativ kann die Mikrolinsenarray-Anordnung zwei Mikrolinsenarrays mit zylindrischen Mikrolinsen aufweisen, die jeweils eine Vielzahl von gleichen, zylindrischen Mikrolinsen aufweisen, wobei die beiden Mikrolinsenarrays in Bezug auf die Zylinderachsen der zylindrischen Mikrolinsen gekreuzt angeordnet sind. Die Mikrolinsenarray-Anordnung kann auch als ein Mikrowabenkondensor ausgebildet sein.

Der Erfindung liegt die Überlegung zugrunde, dass eine zuverlässige Strukturbreiten-Messung nur möglich ist, wenn eine gleichmäßige Feldausleuchtung auf dem zu untersuchenden Objekt und eine zumindest rotationssymmetrische Intensitätsverteilung in der Pupille des Kondensors vorliegen. Beide Bedingungen sind eine notwendige Voraussetzung für eine optische Strukturbreiten-Messung mit hoher Genauigkeit. Dies liegt daran, dass jegliche Form von schräger Beleuchtung zu unterschiedlichen Messergebnissen an der linken Kante und der rechten Kante einer Struktur führen, so dass die Differenzbildung, also die eigentliche Strukturbreiten-Bestimmung, stets mit einem Fehler behaftet ist. Aufgrund dieser Voraussetzungen, also einer gleichmäßigen Feldausleuchtung und einer zumindest rotationssymmetrischen Intensitätsverteilung in der Pupille, ist es möglich, nahezu unabhängig von der Position und der Orientierung der zu untersuchenden Struktur im Messfeld reproduzierbare Messungen der Breite von Mikro- und Submikrostrukturen durchzuführen. Will man also die aus dem Stand der Technik bekannten Nachteile der Beleuchtungsinhomogenitäten vermeiden, so müssen die für die Strukturbreitenmessungen ungünstigen Nah- und Femfeldverteilungen von Gasentladungslampen bzw. in analoger Weise bei einer Beleuchtung mittels eines Lasers die Intensitätsunterschiede durch Laserlichtgranulation im Messfeld homogenisiert werden.

Dazu weist das erfindungsgemäße Strukturbreiten-Messgerät eine zweistufige Homogenisierung in der Beleuchtung auf, so dass eine Beleuchtung nach dem Köhler'schen Prinzip vorliegt, welche eine homogene Feldausleuchtung bei gleichzeitiger rotationssymmetrischer Intensitätsverteilung in der Pupille aufweist. Da für die Strukturbreiten-Messung die jeweils zu vermessende Kante einer Struktur im Messfeld positioniert wird, wird durch die rotationssymmetrische Intensitätsverteilung in der Pupille des Kondensors sichergestellt, dass sowohl bei fallenden als auch ansteigenden Kanten, also beispielsweise der linken und der rechten Kante einer Struktur, mit denselben Intensitäts- und Beleuchtungsverhältnissen gemessen werden kann. Daher ist mit dem vorliegenden Strukturbreiten-Messgerät erstmals eine Messung von Strukturbreiten möglich, die unabhängig von der Position der zu untersuchenden Struktur im Messfeld und unabhängig von der Orientierung der zu untersuchenden Struktur im Messfeld vorgenommen werden kann.

Die Erfindung wird nachfolgend anhand der schematischen Zeichnung ausführlich beschrieben. Es zeigen:
- ***Fig. 1**:*: ein Strukturbreiten-Messgerät mit einer Gasentladungslampe als Lichtquelle;
- ***Fig. 2***:: eine Detailvergrößerung "A" aus der Fig. 1 mit der ersten Homogenisierungsstufe der Beleuchtung;
- ***Fig. 3***:: eine weitere Detailvergrößerung "B" aus der Fig. 1 mit der zweiten Homogenisierungsstufe der Beleuchtung;
- ***Fig. 4***:: Intensitätsverteilung in der Pupille.

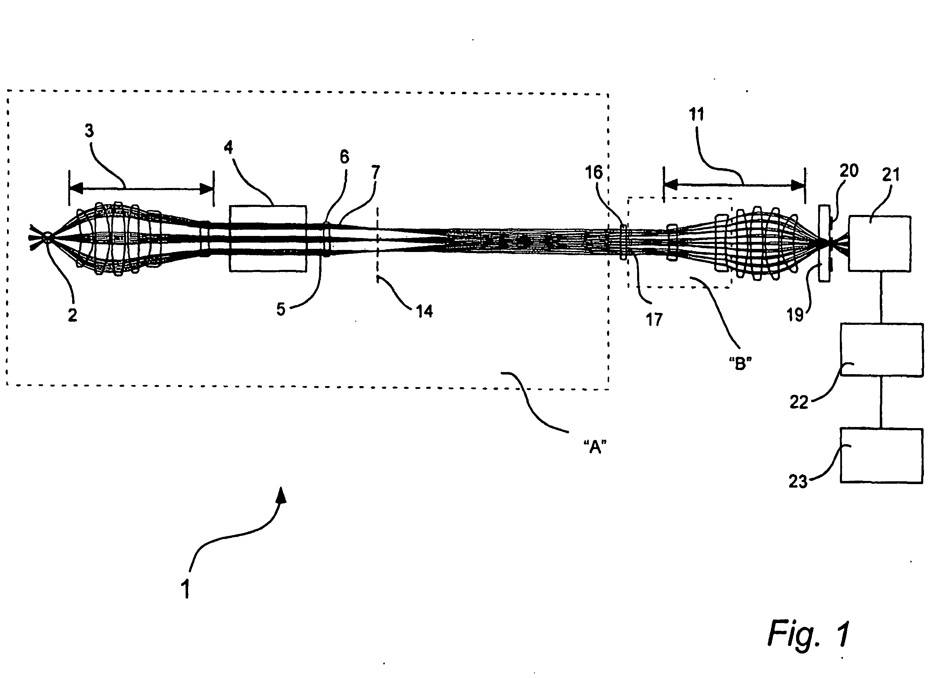

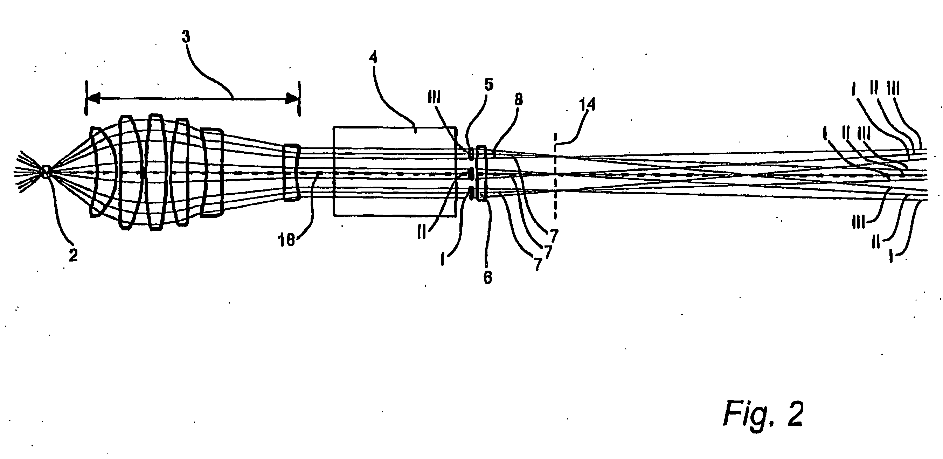

***Fig. 1*** zeigt den schematischen optischen Aufbau eines Strukturbreiten-Messgerätes 1 mit einer erfindungsgemäßen Feld- und Pupillenhomogenisierung auf Basis einer Köhler'schen Beleuchtung. Als Lichtquelle 2 ist in der vorliegenden Ausführungsform eine Gasentladungslampe angeordnet. Das von der Gasentladungslampe emittierte Licht wird von einem Kollektor 3 gesammelt. Die Lichtquelle 2 steht im Fokus des Kollektors 3 und bildet daher das leuchtende Plasma nach ∞ ab. Im Strahlengang ist nach dem Kollektor 3 ein spektral wirksames Filtersystem 4 angeordnet, das den zur Beleuchtung bestimmten spektralen Anteil des Lampenspektrums der Gasentladungslampe herausfiltert. Nach dem Filtersystem 4 ist eine erste Mikrolinsenarray-Anordnung 5 und danach ein erstes optisches Hilfselement 6 mit positiver Brechkraft angeordnet. ***Fig. 2*** zeigt eine Detailvergrößerung "A" aus der Fig. 1 mit dieser ersten Homogenisierungsstufe der Beleuchtung, die nachfolgend näher beschrieben wird.

Bei der ersten Mikrolinsenarray-Anordnung 5 kann es sich um ein refraktives oder diffraktives Mikrolinsenarray oder auch um eine Kombination aus zwei oder mehreren solcher Arrays handeln. Dabei können die einzelnen Mikrolinsen beispielsweise eine sechseckige oder auch eine quadratische Kontur aufweisen. Die Mikrolinsen können jeweils als sammelnde oder zerstreuende Linsen ausgebildet sein. Es ist auch denkbar, zwei Mikrolinsenarrays mit jeweils zylindrischen Mikrolinsen in gekreuzter Orientierung zueinander anzuordnen. Aus Gründen der Anschaulichkeit der Zeichnung sind von der ersten Mikrolinsenarray-Anordnung 5 nur drei Mikrolinsen I, II und III dargestellt. Hierbei handelt es sich also lediglich um eine schematische Reduzierung auf drei Mikrolinsen, während das tatsächlich angeordnete Mikrolinsenarray eine Vielzahl von Mikrolinsen aufweist. Wie bei bekannten Mikrolinsenarrays sind auch bei der hier verwendeten ersten Mikrolinsenarray-Anordnung 5 die einzelnen Mikrolinsen gleich.

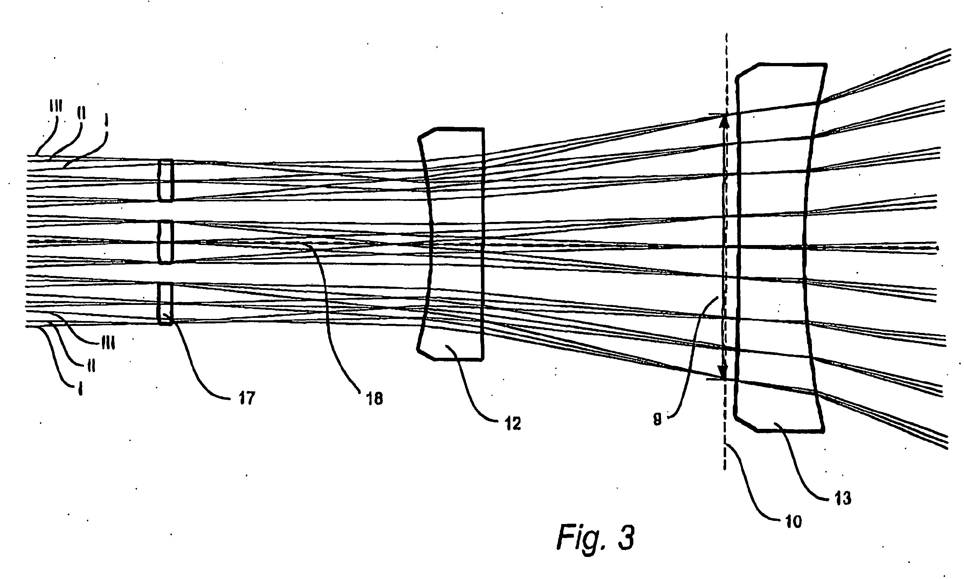

Jede Mikrolinse I, II und III erzeugt ein kegelförmiges Strahlenbündel 7 mit einem Öffnungswinkel 8, der nachfolgend als Divergenzwinkel bzw. als kurz als Divergenz bezeichnet wird. Diese Divergenz wird so gewählt, dass das von jeder Mikrolinse I, II und III ausgehende Strahlenbündel 7 die Kondensor-Pupille 9 in der Kondensor-Pupillenebene 10 des Kondensors 11 vollständig ausleuchtet. Die Lage der Kondensor-Pupillenebene 10 mit der Kondensor-Pupille 9 ist in ***Fig. 3*** dargestellt, welche eine Detailvergrößerung "B" der ***Fig. 1*** zeigt. Daraus geht hervor, dass bei der hier verwendeten Ausführungsform des Kondensors 11 die Kondensor-Pupillenebene 10 zwischen der ersten Kondensorlinse 12 und der zweiten Kondensorlinse 13 liegt. Zur Veranschaulichung sind in den ***Fig. 2*** und ***Fig. 3*** die von den Mikrolinsen I, II und III der ersten Mikrolinsenarray-Anordnung 5 ausgehenden, beispielhaft gezeichneten Strahlen ebenfalls mit I, 11 und III bezeichnet.

Die Divergenz der Strahlenbündel 7 wird von der Brechkraft der einzelnen Mikrolinsen I, II und III bestimmt. Die Brechkraft der einzelnen Mikrolinsen und damit die Divergenz ist so gewählt, dass der Abstand von der kondensorseitigen Brennebene 14 der ersten Mikrolinsenarray-Anordnung 5 bis zur Kondensor-Pupille 9 multipliziert mit dem Tangens des halben Divergenz-Winkels 8 ≥ dem Radius 13 der Kondensor-Pupille 9 ist.

Ohne das erste optische Hilfselement 6 würden die einzelnen konvergenten bzw. divergenten Strahlenbündel 7, die von den einzelnen Mikrolinsen I, II und III ausgehen, zwar alle denselben Öffnungswinkel 8, das heißt dieselbe Divergenz, aufweisen, jedoch mit unterschiedlichem Seitenversatz in der Kondensor-Pupillenebene 10 ankommen. Dieser Versatz würde dazu führen, dass Anteile der Strahlenbündel 7 außerhalb der Kondersor-Pupille 9 auftreffen würden. Dies würde zu einem Lichtintensitätsverlust und einem Helligkeitsabfall am Rand der Kondersor-Pupille 9 führen.

Um dies zu verhindern, werden mittels des ersten optischen Hilfselementes 6 sämtliche, von den Mikrolinsen I, II und III ausgehenden Strahlenbündel 7 auf die Kondensor-Pupille 9 ausgerichtet. Dazu wird ein erstes optisches Hilfselement 6 mit positiver Brechkraft eingesetzt. Die Brennweite des ersten optischen Hilfselementes 6 ist im wesentlichen gleich dem Abstand des ersten optischen Hilfselementes 6 von der Kondensor-Pupille 9. Dies bewirkt, dass die Mittenstrahlen der von den einzelnen Mikrolinsen I, II und III ausgehenden Strahlenbündel 7, die vor dem ersten optischen Hilfselement 6 noch parallel verlaufen, nunmehr nach dem ersten optischen Hilfselement 6 konvergent in die Mitte der Kondensor-Pupille 9 gerichtet sind. Dabei wird die Kondensor-Pupille 9 leicht überbedient. Dies heißt, dass die in der Kondensor-Pupillenebene 10 ausgeleuchtete Fläche etwas größer als die Kondensor-Pupille selbst ist. *Fig. **3*** zeigt aus Gründen der Übersichtlichkeit die Kondensor-Pupille 9 jedoch lediglich ausgefüllt, nicht überbedient, da hierfür noch wesentlich mehr Strahlen dargestellt werden müssten.

Die Vielzahl der Mikrolinsen führt zu einer Intensitätsmittelung und damit zu einer Homogenisierung der Intensitätsverteilung in der Kondensor-Pupille 9. In der Nähe der kondensorseitigen Brennebene 14, also der Fokus-Ebene, der einzelnen Mikrolinsen der ersten Mikrolinsenarray-Anordnung 5 entstehen Zwischenbilder des leuchtenden Plasmas der Gasentladungslampe, also der Lichtquelle 2. Die Anzahl dieser Zwischenbilder entspricht der Anzahl der Mikrolinsen I, II und III.

Diese Zwischenbilder werden mit Hilfe eines zweiten optischen Hilfselementes 16 mit positiver Brechkraft und einer zweiten Mikrolinsenarray-Anordnung 17 vielfach und jeweils versetzt in die Kondensor-Pupille 9, also in die Kondensor-Pupillenebene 10, abgebildet. Auch von der zweiten Mikrolinsenarray-Anordnung 17 sind in ***Fig. 1*** und ***Fig. 3*** zur Vereinfachung schematisch nur drei Mikrolinsen dargestellt, obwohl es sich in der Realität um eine Vielzahl von Mikrolinsen handelt.

Das zweite optische Hilfselement 16 bewirkt, dass die Mittenstrahlen der von den einzelnen (in der Fokusebene 14 gelegenen) Zwischenbildern ausgehenden divergenten Strahlenbündel ausgerichtet werden. Vor dem zweiten optischen Hilfselement 16 verlaufen die Mittenstrahlen dieser einzelnen Strahlenbündel divergent und werden durch das zweite optische Hilfselement 16 parallel zur optischen Achse 18 (in ***Fig. 2*** und ***Fig. 3*** gezeigt) des Gesamtsystems ausgerichtet. Die zweite Mikrolinsenarray-Anordnung 17 ist so ausgerichtet, dass jeweils ein von einem Zwischenbild ausgehendes Strahlenbündel auf eine Mikrolinse der zweiten Mikrolinsenarray-Anordnung 17 trifft.

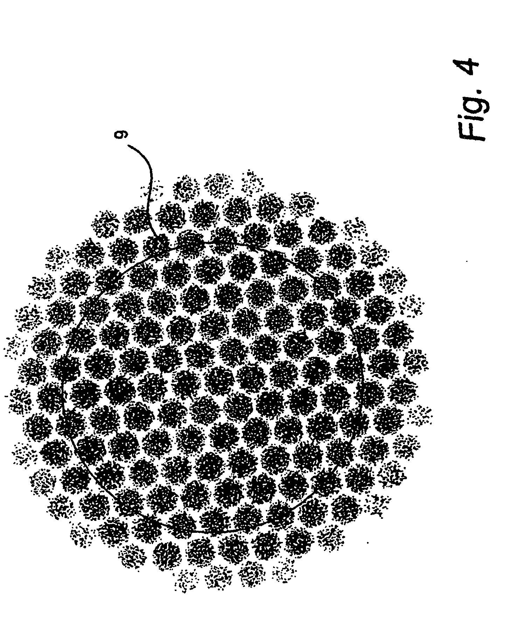

Die Divergenz der einzelnen Mikrolinsen der zweiten Mikrolinsenarray-Anordnung 17 bestimmt, wie groß das auf dem Objekt 19 ausgeleuchtete homogene Feld ist. Dies bedeutet anschaulich: Ein kleiner Öffnungswinkel der einzelnen in der Kondensor-Pupillenebene 10 auftreffenden Strahlenbündel bewirkt ein kleines, homogen ausgeleuchtetes Feld auf dem Objekt 19, dessen Strukturen 20 vermessen werden sollen. Analog bewirkt ein großer Öffnungswinkel, also eine große Divergenz, der einzelnen in der Kondensor-Pupillenebene 10 auftreffenden Strahlenbündel ein großes homogen ausgeleuchtetes Feld auf dem zu vermessenden Objekt 19, allerdings mit geringerer Intensität als bei dem kleinen Feld. Durch geeignete Wahl der Brennweiten der Mikrolinsen der zweiten Mikrolinsenarray-Anordnung 17 wird daher die Größe des ausgeleuchteten Objektfeldes bestimmt. Die mit dem zweiten optischen Hilfselement 16 und der zweiten Mikrolinsenarray-Anordnung 17 erzielte zweite Vielfachabbildung bewirkt die Feldhomogenisierung der Lichtintensität. Man erhält dadurch die in der ***Fig. 4*** gezeigte Intensitätsverteilung in der Kondensor-Pupille 9. Wie bereits beschrieben, wird die Kondensor-Pupille 9 leicht überbedient.

Somit bestimmen die Divergenz der zweiten Mikrolinsenarray-Anordnung 17 und die Brennweite des Kondensors 11 die Größe des ausgeleuchteten Feldes auf dem Objekt 19. Vorzugsweise wird die Divergenz der zweiten Mikrolinsen-Array-Anordnung 17, d.h. der Mikrolinsen dieser zweiten Mikrolinsen-Array-Anordnung 17, so gewählt, dass das auszuleuchtende Objektfeld leicht überstrahlt wird.

Wie in Fig.1 dargestellt, handelt es sich bei dem Objekt 19 um ein transparentes Substrat, auf dessen rechts dargestellter Oberfläche die zu untersuchenden Strukturen 20 aufgebracht sind. Bei diesem Objekt kann es sich beispielsweise um eine Maske für die Halbleiter-Herstellung handeln. Die optische Untersuchung erfolgt daher im Durchlicht. Die zu untersuchenden Strukturen 20 befinden sich im Fokus. Eine abbildende Optik 21 bildet die Strukturen des Objekts 19 auf eine Bildaufnahme-Einrichtung 22 ab, welche beispielsweise eine Kamera sein kann. Die aufgenommenen Bilder der Bildaufnahme-Einrichtung 22 werden an eine Bildauswerte-Einrichtung 23 übertragen, welche aus den Bildern die Strukturbreiten der Strukturen 20 bestimmt. Die Bildauswerte-Einrichtung 23 kann beispielsweise einen Computer mit der zugehörigen Software umfassen.

### Bezugszeichenliste

- 1.: Strukturbreiten-Messgerät
- 2.: Lichtquelle
- 3.: Kollektor
- 4.: Filtersystem
- 5.: erste Mikrolinsenarray-Anordnung (MLA)
- 6.: erstes optisches Hilfselement
- 7.: Strahlenbündel
- 8.: Öffnungswinkel = Divergenzwinkel
- 9.: Kondensor-Pupille
- 10.: Kondensor-Pupillenebene
- 11.: Kondensor
- 12.: erste Kondensorlinse
- 13.: zweite Kondensorlinse
- 14.: kondensorseitige Brennebene der ersten MLA
- 15.: Radius der Kondensor-Pupille
- 16.: zweites optisches Hilfselement
- 17.: zweite Mikrolinsenarray-Anordnung (MLA)
- 18.: optische Achse
- 19.: Objekt
- 20.: Strukturen
- 21.: abbildende Optik
- 22.: Bildaufnahme-Einrichtung
- 23.: Bildauswerte-Einrichtung

- I, II, III =: Mikrolinsen bzw. ihnen zugeordnete Strahlen

## Patentansprüche

1. Strukturbrelten-Messgerät (1) mit einer Lichtquelle (2), einer Strahlformungsoptik (3), einem Kondensor (11) der ein Objekt (19) mit zu vermessenden Strukturen beleuchtet
**dadurch gekennzeichnet,**
**dass** zwischen der Strahlformungsoptik (3) und dem Kondensor (11) nacheinander folgende Elemente angeordnet sind:
a) eine erste Mikrolinsenarray-Anordnung (5), wobei jede Mikrolinse (I, II, III) ein divergentes Strahlenbündel (7) erzeugt, das die Kondensor-Pupille (9) ausfüllt,
b) ein erstes optisches Hilfselement (6) mit positiver Brechkraft,
c) ein zweites optisches Hilfselemennt (16) mit positiver Brechkraft,
d) und eine zweite MikrolinsenarrayAnordnung (17) und dass die Brennebene des ersten optischen Hilfselements (6) in der Kondensor-Pupille (9) liegt, wodurch die Mittenstrahlen der von den einzelnen Mikrolinsen (I, II, III) ausgehenden Strahlenbündel (7) konvergent In die Mitte der Kondensor-Pupille (9) gerichtet sind, und dass die in der Nähe den Fokusebene der ersten Mikrolinsenarray - Anordnung (5) entstehenden Zwiechen bilder mit Hilfe der zweiten optischen Hilfselementes (16) mit positiven Brechkraft und der zweiten Mikrolinsenarray - Anordnung (17) in die Kondensor - Pupillenebene (9) abgebildet werden.

2. Strukturbreiten-Messgerät (1) nach Anspruch 1, **dadurch gekennzeichnet, dass** die Lichtquelle (2) ein Laser und die Strahlformungsoptik eine Strahlaufweitungsoptik ist.

3. Strukturbreiten-Messgerät (1) nach Anspruch 1, **dadurch gekennzeichnet, dass** die Lichtquelle (2) eine Gasentladungslampe und die Strahlformungsoptik ein Kollektor (3) ist.

4. Strukturbreiten-Messgerät (1) nach Anspruch 3, **dadurch gekennzeichnet, dass** zusätzlich ein spektral wirksames Filtersystem (4) vorgesehen ist, welches nur den für die jeweilige Messung erforderlichen Spektralanteil des Lichtquellenspektrums durchlässt.

5. Strukturbreiten-Messgerät (1) nach Anspruch 4, **dadurch gekennzeichnet, dass** das spektral wirksame Filtersystem (4) am Ausgang des Kollektors (3) angeordnet ist.

6. Strukturbreiten-Messgerät (1) nach Anspruch 1, **dadurch gekennzeichnet, dass** die erste Mikrolinsenarray-Anordnung (5) eine Vielzahl von gleichen, sechseckigen, wabenförmigen oder gleichen, quadratischen Mikrolinsen (I, II, III) aufweist.

7. Strukturbreiten-Messgerät (1) nach Anspruch 1, **dadurch gekennzeichnet, dass** die zweite Mikrolinsenarray-Anordnung (17) eine Vielzahl von gleichen, sechseckigen, wabenförmigen oder gleichen, quadratischen Mikrolinsen (I, II, III) aufweist.

8. Strukturbreiten-Messgerät (1) nach Anspruch 1, **dadurch gekennzeichnet, dass** die erste Mikrolinsenarray-Anordnung (5) zwei Mikrolinsenarrays mit zylindrischen Mikrolinsen aufweist, die jeweils eine Vielzahl von gleichen, zylindrischen Mikrolinsen aufweisen, wobei die beiden Mikrolinsenarrays in Bezug auf die Zylinderachsen der zylindrischen Mikrolinsen gekreuzt angeordnet sind.

9. Strukturbreiten-Messgerät (1) nach Anspruch 1, **dadurch gekennzeichnet, dass** die zweite Mikrolinsenarray-Anordnung (17) zwei Mikrolinsenarrays mit zylindrischen Mikrolinsen aufweist, die jeweils eine Vielzahl von gleichen, zylindrischen Mikrolinsen aufweisen, wobei die beiden Mikrolinsenarrays in Bezug auf die Zylinderachsen der zylindrischen Mikrolinsen gekreuzt angeordnet sind.

10. Strukturbreiten-Messgerät (1) nach Anspruch 1, **dadurch gekennzeichnet, dass** die erste Mikrolinsenarray-Anordnung (5) und/oder die zweite Mikrolinsenarray-Anordnung (17) als ein Mikrowabenkondensor ausgebildet ist.

## Revendications

1. Appareil de mesure de largeurs de structure (1) avec une source lumineuse (2), un système optique de modelage de rayon (3), un condenseur (11) qui éclaire un objet (19) avec des structures à mesurer,
**caractérisé en ce que**
les éléments suivants sont disposés l'un à la suite de l'autre entre le système optique de modelage de rayon (3) et le condenseur (11) :
a) un premier arrangement de microlentilles regroupées (5), étant donné que chaque microlentille (I, II, III) génère un faisceau de rayons divergent qui remplit la pupille (9) du condenseur,
b) un premier élément auxiliaire (6) optique avec pouvoir convergent positif,
c) un deuxième élément auxiliaire (16) optique avec pouvoir convergent positif,
d) et un deuxième arrangement de microlentilles regroupées (17)
et **en ce que** le plan focal du premier élément auxiliaire optique (6) est situé dans la pupille (9) du condenseur, ce par quoi les rayons centraux des faisceaux de rayons (7) partant des différentes microlentilles (I, II, III) sont orientés de façon convergente au centre de la pupille (9) du condenseur,
et **en ce que** les images intermédiaires qui naissent à proximité du plan focal du premier arrangement de microlentilles regroupées (5) sont reproduites à l'aide du deuxième élément auxiliaire optique (16) avec pouvoir convergent positif et du deuxième arrangement de microlentilles regroupées (17) dans le plan de la pupille (9) du condenseur.

2. Appareil de mesure de largeurs de structure (1) selon la revendication 1, **caractérisé en ce que** la source lumineuse (2) est un laser et le système optique de modelage de faisceau est un système optique d'étalage de faisceau.

3. Appareil de mesure de largeurs de structure (1) selon la revendication 1, **caractérisé en ce que** la source lumineuse (2) est une lampe luminescente à gaz et le système optique de modelage de faisceau est un collecteur (3).

4. Appareil de mesure de largeurs de structure (1) selon la revendication 3, **caractérisé en ce que** un système de filtration (4) supplémentaire à effet spectral qui ne laisse passer que la part spectrale du spectre de source lumineuse qui est nécessaire pour la mesure est prévu.

5. Appareil de mesure de largeurs de structure (1) selon la revendication 4, **caractérisé en ce que** le système de filtration (4) supplémentaire à effet spectral est disposé à la sortie du collecteur (3).

6. Appareil de mesure de largeurs de structure (1) selon la revendication 1, **caractérisé en ce que** le premier arrangement de microlentilles regroupées (5) présente une pluralité de microlentilles identiques hexagonales alvéolaires ou de microlentilles identiques carrées (I, II, III).

7. Appareil de mesure de largeurs de structure (1) selon la revendication 1, **caractérisé en ce que** le deuxième arrangement de microlentilles regroupées (17) présente une pluralité de microlentilles identiques hexagonales alvéolaires ou de microlentilles identiques carrées (I, II, III).

8. Appareil de mesure de largeurs de structure (1) selon la revendication 1, **caractérisé en ce que** le premier arrangement de microlentilles regroupées (5) présente deux groupes de microlentilles à microlentilles cylindriques qui présentent chacun une pluralité de microlentilles identiques hexagonales, étant donné que les deux groupes de microlentilles sont disposées en croix par rapport aux axes cylindriques des microlentilles cylindriques.

9. Appareil de mesure de largeurs de structure (1) selon la revendication 1, **caractérisé en ce que** le deuxième arrangement de microlentilles regroupées (17) présente deux groupes de microlentilles à microlentilles cylindriques qui présentent chacun une pluralité de microlentilles identiques hexagonales, étant donné que les deux groupes de microlentilles sont disposées en croix par rapport aux axes cylindriques des microlentilles cylindriques.

10. Appareil de mesure de largeurs de structure (1) selon la revendication 1, **caractérisé en ce que** le premier arrangement de microlentilles regroupées (5) et/ou le deuxième arrangement de microlentilles regroupées (17) est/sont formé(s) comme un condenseur microalvéolaire.

## Claims

1. Apparatus for measuring structure widths (1) having a light source (2), beam-forming optics (3), and a condenser (11), which illuminates an object (19) having structures that are to be measured,
**characterized in that**
the following elements are arranged in succession between the beam-forming optics (3) and the condenser (11):
a) a first microlens array arrangement (5), each microlens (I, II, III) generating a divergent pencil of rays (7), which fills the condenser pupil (9),
b) a first optical auxiliary element (6) having a positive refractive power,
c) a second optical auxiliary element (16) having a positive refractive power,
d) a second microlens array arrangement (17),
and that the focal plane of the first optical auxiliary element (6) lies in the condenser pupil (9), whereby the central rays of the pencils (7) emanating from the individual microlenses (I, II, III) are directed convergently into the centre of the condenser pupil (9),
and that the second optical auxiliary element (16) having a positive refractive power and the second microlens array arrangement (17) serve for imaging of the intermediate images, occurring in proximity to the focal plane of the first microlens array arrangement (5), into the condenser pupil plane (9).

2. Apparatus for measuring structure widths (1) according to Claim 1, **characterized in that** the light source (2) is a laser and the beam-forming optics are beam-expanding optics.

3. Apparatus for measuring structure widths (1) according to Claim 1, **characterized in that** the light source (2) is a gas discharge lamp and the beam-forming optics are a collector (3).

4. Apparatus for measuring structure widths (1) according to Claim 3, **characterized in that** a spectrally active filter system (4) is additionally provided, which only allows the spectral part of the light source spectrum that is required for the particular measurement to pass.

5. Apparatus for measuring structure widths (1) according to Claim 4, **characterized in that** the spectrally active filter system (4) is arranged at the outlet of the collector lens (3).

6. Apparatus for measuring structure widths (1) according to Claim 1, **characterized in that** the first microlens array arrangement (5) has a plurality of identical hexagonal, honeycomb or identical square microlenses (I, II, III).

7. Apparatus for measuring structure widths (1) according to Claim 1, **characterized in that** the second microlens array arrangement (17) has a plurality of identical hexagonal, honeycomb or identical square microlenses (I, II, III).

8. Apparatus for measuring structure widths (1) according to Claim 1, **characterized in that** the first microlens array arrangement (5) has two microlens arrays with cylindrical microlenses, which each have a plurality of identical cylindrical microlenses, the two microlens arrays being arranged crossed in relation to the cylinder axes of the cylindrical microlenses.

9. Apparatus for measuring structure widths (1) according to Claim 1, **characterized in that** the second microlens array arrangement (17) has two microlens arrays with cylindrical microlenses, which each have a plurality of identical cylindrical microlenses, the two microlens arrays being arranged crossed in relation to the cylinder axes of the cylindrical microlenses.

10. Apparatus for measuring structure widths (1) according to Claim 1, **characterized in that** the first microlens array arrangement (5) and/or the second microlens array arrangement (17) take(s) the form of a micro-honeycomb condenser.
